(19) Europäisches Patentamt
European Patent Office
Office européen des brevets

(11) **EP 3 726 687 A1**

(12) **EUROPEAN PATENT APPLICATION**
published in accordance with Art. 153(4) EPC

(43) Date of publication:
**21.10.2020 Bulletin 2020/43**

(51) Int Cl.:
*H02J 3/32* *(2006.01)*

(21) Application number: 18889878.7

(22) Date of filing: **24.08.2018**

(86) International application number:
**PCT/CN2018/102351**

(87) International publication number:
**WO 2019/114319 (20.06.2019 Gazette 2019/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.12.2017 CN 201711353819**

(71) Applicant: **Nio Nextev Limited**
**Hong Kong (CN)**

(72) Inventors:
• **WU, Yicheng**
  **Hong Kong (CN)**
• **PAN, Xiaobin**
  **Hong Kong (CN)**
• **MA, Xiang**
  **Hong Kong (CN)**
• **SHEN, Fei**
  **Hong Kong (CN)**

(74) Representative: **Vossius & Partner**
**Patentanwälte Rechtsanwälte mbB**
**Siebertstrasse 3**
**81675 München (DE)**

(54) **IDLE-TIME POWER-UP METHOD FOR ELECTRIC DEVICE AND IDLE-TIME ENERGY SUPPLEMENTING METHOD FOR ENERGY-CONSUMING DEVICE**

(57)    The invention belongs to the technical field of energy sources, and particularly relates to a method of power replenishment for an electric apparatus in idle time and a method of energy replenishment for an energy-consuming apparatus in idle time. In order to realize the purpose of intelligently providing power replenishment for an electric apparatus such that users no longer need to worry about the state of charge, the method of power replenishment for an electric apparatus in idle time of the invention comprises the steps of: determining whether a current state of the electric apparatus meets an idle-time condition; further determining whether the current state of the electric apparatus meets a power replenishment condition, if the current state of the electric apparatus meets the idle-time condition; and selectively providing a power replenishment service for the electric apparatus according to a result of the determination with regard to the power replenishment condition. According to the invention, the users no longer need to reserve a power replenishment service on their own initiative, and instead, a power replenishment service is automatically provided for the users' electric apparatus when the users need the power replenishment service, so that the users do not need to worry about the state of charge of the electric apparatus during use of the electric apparatus.

Fig. 1

## Description

### Technical Field

The invention belongs to the technical field of energy sources, and particularly relates to a method of power replenishment for an electric apparatus in idle time and a method of energy replenishment for an energy-consuming apparatus in idle time.

### Background Art

With the popularization of electric vehicles, how to provide fast and effective power replenishment solution for electric vehicles having insufficient power has become an issue that concerns vehicle owners and all major manufacturers a lot. The current power replenishment solution mainly includes a arrive-and-charge solution (such as directly driving to a battery charging and swapping station) and a reserve-and-charge solution. Valet power replenishment is a reserve-and-charge solution for users of pure electric vehicles. At present, the process of valet power replenishment is mainly as follows: a user calls and reserves a power replenishment service through an app, and a server allocates appropriate resources and service personnel to provide the power replenishment service for the user after receiving the user's request. Although the valet power replenishment service has greatly improved user experience compared with users going for power replenishment on their own (directly driving to a battery charging and swapping station), the users still need to concern themselves with the state of charge of their vehicles, so that they can become aware of insufficient battery power in time and call or reserve a valet power replenishment service to charge their vehicles. Similarly, the above problem also exists in other electric apparatus or energy-consuming apparatus of the users.

In view of this, in order to improve the user's sense of freedom in using an electric apparatus/energy-consuming apparatus (such as energy-consuming vehicles), that is, to realize the purpose of intelligently providing power/energy replenishment for an electric apparatus/energy-consuming apparatus such that a user no longer needs to worry about the remaining energy of their apparatus, the invention is proposed hereby.

### Summary of the Invention

In order to solve the above problem in the prior art, i.e., to realize the purpose of intelligently providing power/energy replenishment for an electric apparatus/energy-consuming apparatus such that a user no longer needs to worry about the remaining energy of their apparatus, the invention provides a method of power replenishment for an electric apparatus in idle time, comprising the steps of: determining whether a current state of the electric apparatus meets an idle-time condition; further determining whether the current state of the electric apparatus meets a power replenishment condition, if the current state of the electric apparatus meets the idle-time condition; and selectively providing a power replenishment service for the electric apparatus according to a result of the determination with regard to the power replenishment condition, wherein the idle-time condition comprises an idle time period in which the electric apparatus is not in use.

In a preferred embodiment of the above method of power replenishment for an electric apparatus in idle time, the idle-time condition is manually set by a user of the electric apparatus or automatically identified based on historical data of the electric apparatus.

In a preferred embodiment of the above method of power replenishment for an electric apparatus in idle time, the current state of the electric apparatus comprises a use state, and the step of "further determining whether the current state of the electric apparatus meets a power replenishment condition, if the current state of the electric apparatus meets the idle-time condition" specifically comprises: further determining whether the current state of the electric apparatus meets a power replenishment condition, if a current time falls into the idle time period and the electric apparatus is not in use.

In a preferred embodiment of the above method of power replenishment for an electric apparatus in idle time, the idle-time condition further comprises a storage place corresponding to the idle time period, and the current state of the electric apparatus further comprises a storage state.

In a preferred embodiment of the above method of power replenishment for an electric apparatus in idle time, the step of "further determining whether the current state of the electric apparatus meets a power replenishment condition, if the current state of the electric apparatus meets the idle-time condition" specifically comprises: further determining whether the current state of the electric apparatus meets a power replenishment condition, if a current time falls into the idle time period and the electric apparatus is not in use and is stored in the storage place corresponding to the idle time period.

In a preferred embodiment of the above method of power replenishment for an electric apparatus in idle time, the step of "selectively providing a power replenishment service for the electric apparatus according to a result of the determination with regard to the power replenishment condition" specifically comprises: providing a power replenishment service for the electric apparatus, if the current state of the electric apparatus meets the power replenishment condition.

In a preferred embodiment of the above method of power replenishment for an electric apparatus in idle time, the current state of the electric apparatus comprises a state of charge, and the step of "providing a power replenishment service for the electric apparatus, if the current state of the electric apparatus meets the power replenishment condition" specifically comprises: providing a power replenishment service for the electric apparatus, if the state of charge is less than a first set threshold.

In a preferred embodiment of the above method of power replenishment for an electric apparatus in idle time, the electric apparatus is an electric vehicle, and the current state of the electric apparatus comprises a remaining range of the electric vehicle.

In a preferred embodiment of the above method of power replenishment for an electric apparatus in idle time, the step of "providing a power replenishment service for the electric apparatus, if the current state of the electric apparatus meets the power replenishment condition" specifically comprises: providing a power replenishment service for the electric vehicle, if the remaining range minus a driving distance in a next driving period of the electric vehicle is less than a second set threshold.

In a preferred embodiment of the above method of power replenishment for an electric apparatus in idle time, the step of "providing a power replenishment service for the electric apparatus, if the current state of the electric apparatus meets the power replenishment condition" specifically comprises: providing a power replenishment service for the electric vehicle, if the remaining range minus a driving distance in a future time period of the electric vehicle is less than a third set threshold.

In a preferred embodiment of the above method of power replenishment for an electric apparatus in idle time, the electric apparatus is an electric vehicle, and the power replenishment service is a valet power replenishment service actively initiated by a power replenishment service provider.

In a preferred embodiment of the above method of power replenishment for an electric apparatus in idle time, the power replenishment service provider sends a confirmation message to the user before initiating the valet power replenishment service, and provides the valet power replenishment service only after a confirmation is received from the user.

The invention also provides a processing device, which is adapted to load and run a program so as to perform the above method of power replenishment for an electric apparatus in idle time.

The invention also provides a storage device in which a plurality of programs are stored, wherein the programs are adapted to be loaded by a processor to perform the above method of power replenishment for an electric apparatus in idle time.

The invention also provides a method of energy replenishment for an energy-consuming apparatus in idle time, comprising the steps of: determining whether a current state of the energy-consuming apparatus meets an idle-time condition; further determining whether the current state of the energy-consuming apparatus meets an energy replenishment condition, if the current state of the energy-consuming apparatus meets the idle-time condition; and selectively providing an energy replenishment service for the energy-consuming apparatus according to a result of the determination with regard to the energy replenishment condition, wherein the idle-time condition comprises an idle time period in which the energy-consuming apparatus is not in use.

In a preferred embodiment of the above method of energy replenishment for an energy-consuming apparatus in idle time, the idle-time condition is manually set by a user of the energy-consuming apparatus or automatically identified based on historical data of the energy-consuming apparatus.

In a preferred embodiment of the above method of energy replenishment for an energy-consuming apparatus in idle time, the current state of the energy-consuming apparatus comprises a use state, and the step of "further determining whether the current state of the energy-consuming apparatus meets an energy replenishment condition, if the current state of the energy-consuming apparatus meets the idle-time condition" specifically comprises: further determining whether the current state of the energy-consuming apparatus meets an energy replenishment condition, if a current time falls into the idle time period and the energy-consuming apparatus is not in use and is stored in the storage place corresponding to the idle time period.

In a preferred embodiment of the above method of energy replenishment for an energy-consuming apparatus in idle time, the idle-time condition further comprises a storage place corresponding to the idle time period, and the current state of the electric apparatus further comprises a storage state.

In a preferred embodiment of the above method of energy replenishment for an energy-consuming apparatus in idle time, the step of "further determining whether the current state of the energy-consuming apparatus meets an energy replenishment condition, if the current state of the energy-consuming apparatus meets the idle-time condition" specifically comprises: further determining whether the current state of the energy-consuming apparatus meets an energy replenishment condition, if a current time falls into the idle time period and the energy-consuming apparatus is not in use and is stored in the storage place corresponding to the idle time period.

In a preferred embodiment of the above method of energy replenishment for an energy-consuming apparatus in idle time, the step of "selectively providing an energy replenishment service for the energy-consuming apparatus according to a result of the determination with regard to the energy replenishment condition" specifically comprises: providing an energy replenishment service for the energy-consuming apparatus, if the current state of the energy-consuming apparatus meets the energy replenishment condition.

In a preferred embodiment of the above method of energy replenishment for an energy-consuming apparatus in idle time, the current state of the energy-consuming apparatus comprises a remaining amount of energy, and the step of "providing an energy replenishment service for the energy-consuming apparatus, if the current state of the energy-consuming apparatus meets the energy replenishment condition" specifically comprises: providing an energy replenishment service for the energy-consuming apparatus, if the remaining amount of energy is less than a first set threshold.

In a preferred embodiment of the above method of energy replenishment for an energy-consuming apparatus in idle time, the energy-consuming apparatus is a fuel vehicle, and the current state of the energy-consuming apparatus comprises a remaining range of the fuel vehicle.

In a preferred embodiment of the above method of energy replenishment for an energy-consuming apparatus in idle time, the step of "providing an energy replenishment service for the energy-consuming apparatus, if the current state of the energy-consuming apparatus meets the energy replenishment condition" specifically comprises: providing an energy replenishment service for the fuel vehicle, if the remaining range minus a driving distance in a next driving period of the fuel vehicle is less than a second set threshold.

In a preferred embodiment of the above method of energy replenishment for an energy-consuming apparatus in idle time, the step of "providing an energy replenishment service for the energy-consuming apparatus, if the current state of the energy-consuming apparatus meets the energy replenishment condition" specifically comprises: providing an energy replenishment service for the fuel vehicle, if the remaining range minus a driving distance in a future time period of the fuel vehicle is less than a third set threshold.

In a preferred embodiment of the above method of energy replenishment for an energy-consuming apparatus in idle time, the energy-consuming apparatus is a fuel vehicle, and the energy replenishment service is a valet energy replenishment service actively initiated by a fuel supplier.

In a preferred embodiment of the above method of energy replenishment for an energy-consuming apparatus in idle time, the fuel supplier sends a confirmation message to the user before initiating the valet energy replenishment service, and provides the valet energy replenishment service only after a confirmation is received from the user.

The invention also provides a processing device, which is adapted to load and run a program so as to perform the above method of energy replenishment for an energy-consuming apparatus in idle time.

The invention also provides a storage device in which a plurality of programs are stored, wherein the programs are adapted to be loaded by a processor to perform the above method of energy replenishment for an energy-consuming apparatus in idle time.

In a preferred embodiment where the electric apparatus is an electric vehicle, by determining whether a current state of the electric vehicle meets an idle-time condition, and after the idle-time condition is met, determining whether the current state of the electric vehicle meets a power replenishment condition, such as whether the current state of charge of the electric vehicle is less than a first preset threshold and whether the current remaining range of the electric vehicle can satisfy the need of range consumption in a next driving period/a future period of time, etc., thereby determines whether to provide a power replenishment service for the electric vehicle, the invention realizes the purpose of automatically providing a power replenishment service for the electric vehicle. According to the technical solution of the invention, a user no longer needs to call and reserve a power replenishment service through an app, and instead, a power replenishment service is automatically provided for the user's electric vehicle when the user's electric vehicle needs the power replenishment service, so that the user does not need to worry about the state of charge of the electric vehicle during use of the electric vehicle. Accordingly, when applied to other electric apparatus or energy-consuming apparatus, such as a fuel vehicle, the method of the invention can also obtain the same technical effect.

**Brief Description of the Drawings**

Fig. 1 is a flow chart of main steps of a method of power replenishment for an electric apparatus in idle time of the invention;
Fig. 2 is a schematic diagram of the method of power replenishment of the invention applied to an electric vehicle;
Fig. 3 is a detailed flow chart of the method of power replenishment of the invention applied to an electric vehicle;
Fig. 4 is an overall framework diagram of the method of power replenishment of the invention applied to an electric vehicle; and
Fig. 5 is a flow chart of main steps of a method of energy replenishment for an energy-consuming apparatus in idle time of the invention.

## Detailed Description of Embodiments

To make the technical solutions and advantages of the embodiments of the invention clearer, the technical solutions of the invention will be described clearly and completely with reference to the accompanying drawings. Obviously, the embodiments are only some, rather than all, of the embodiments of the invention. It should be understood by those skilled in the art that these embodiments are only for explaining the technical principles of the invention and are not intended to limit the scope of protection of the invention.

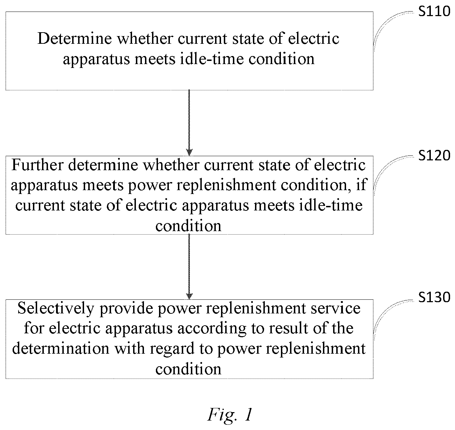

First of all, referring to Fig. 1, Fig. 1 is a flow chart of main steps of a method of power replenishment for an electric apparatus in idle time of the invention. As shown in Fig. 1, the method of power replenishment for an electric apparatus in idle time of the invention mainly comprises the steps of: S 110, determining whether a current state of the electric apparatus meets an idle-time condition; S120, further determining whether the current state of the electric apparatus meets a power replenishment condition, if the current state of the electric apparatus meets the idle-time condition, wherein the "power replenishment condition" mainly comprises whether a current state of charge of the electric vehicle is less than a first preset threshold, whether a current remaining range of the electric vehicle is sufficient to support consumption by a next driving distance, etc.; and S 130, selectively providing a power replenishment service for the electric apparatus according to a result of the determination with regard to the power replenishment condition. In a preferred embodiment of this application, the power replenishment service is a valet power replenishment service actively initiated by a power replenishment service provider. In a first example, the "idle-time condition" comprises an idle time period in which the electric apparatus is not in use. In a second example, the "idle-time condition" comprises an idle time period in which the electric apparatus is not in use and a storage place corresponding to the idle time period. Specifically, according to the invention, before determining whether the current state of the electric apparatus meets the power replenishment condition, the idle time period in which the electric apparatus is not in use can be taken as the sole basis, i.e. determining whether the electric apparatus is in the idle time period in which it is not in use. In addition, before determining whether the current state of the electric apparatus meets the power replenishment condition, both the idle time period in which the electric apparatus is not in use and the storage place corresponding to the idle time period can be alternatively taken as the basis, i.e. determining whether the electric apparatus is currently in the idle time period in which it is not in use and whether the electric apparatus is currently stored in the storage place corresponding to the idle time period.

With the method of power replenishment according to the invention, a user no longer needs to call and reserve a power replenishment service through an app, and instead, a power replenishment service is automatically provided for the user's electric apparatus when the user's electric apparatus needs the power replenishment service, so that the user does not need to worry about the state of charge of the electric apparatus during use of the electric apparatus. Hereinafter, the "idle-time condition" in the second example will be taken as an example for detailed description.

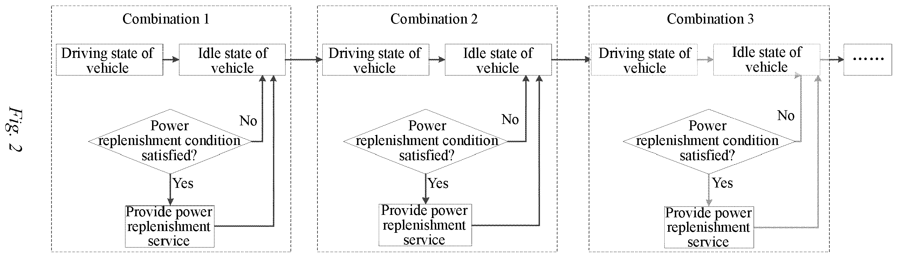

As an example, the electric apparatus may be an electric vehicle. Referring to Fig. 2, Fig. 2 is a schematic diagram of the method of power replenishment of the invention applied to an electric vehicle. As shown in Fig. 2, the usage of any electric vehicle can be represented by the combination sequence shown in Fig. 2, each combination consisting of a driving state of the vehicle and an idle state of the vehicle. Taking combination 1 as an example, when the vehicle is in the idle state, if the electric vehicle meets the power replenishment condition, a power replenishment service can be provided for the electric vehicle, otherwise, the power replenishment service need not be provided. By automatically determining whether it is necessary to provide a power replenishment service for the electric vehicle, the user does not need to call and reserve a power replenishment service through an app, in other words, the user does not need to worry about the state of charge of the electric vehicle, and instead, according to the invention, a power replenishment service will be automatically provided for the electric vehicle when the electric vehicle needs the power replenishment service, thereby essentially realizing an optimized worry-free user experience.

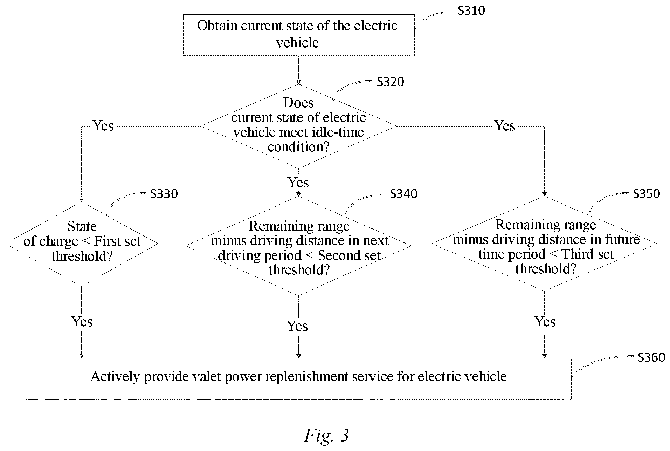

Referring to Fig. 3, Fig. 3 is a detailed step flow chart of the method of power replenishment of the invention applied to an electric vehicle. As shown in Fig. 3, step S310 is first performed to obtain a current state of the electric vehicle. The current state comprises a driving state and a storage place of the electric vehicle. Then in step S320, it is determined whether the current state of the electric vehicle meets an idle-time condition. Specifically, after it is determined that the current time falls into the idle time period, it is determined whether the electric vehicle is in use or not and whether it is stored in the storage place corresponding to the idle time period. If the current time falls into the idle time period and the electric vehicle is not in use and stored in the storage place corresponding to the idle time, it can be determined that the current state of the electric vehicle meets the idle-time condition.

It should be noted that the above-mentioned "idle-time condition" can be manually set by the user of the electric vehicle. For example, the user inputs the everyday idle time period of his/her electric vehicle and the parking place corresponding to the idle time period as the "idle-time condition" to a background server through an app or other means. Preferably, for one and the same idle time period, the user can input a plurality of different places corresponding to the idle time period. Alternatively, the above-mentioned "idle-time condition" can also be automatically generated by the server based on historical data of the electric vehicle. For example, the server can collect the driving data of the user's electric vehicle, and then automatically identify idle time periods of the electric vehicle and parking places corresponding to the idle time periods, respectively, by means of statistics or machine learning, as the above-mentioned "idle-time condition".

Next, in step S330, it is determined whether the state of charge of the electric vehicle is less than a first set threshold. The first set threshold may be manually set by the user of the electric vehicle, set by the server, or determined by other means, and the magnitude of the first set threshold does not limit the scope of protection of the invention. The server obtains the state of charge of the electric vehicle, and determines whether the state of charge of the electric vehicle is less than the first set threshold. If the state of charge of the electric vehicle is less than the first set threshold, the method proceeds to step S360 to actively provide a valet power replenishment service for the electric vehicle.

In step S340, it is determined whether a remaining range of the electric vehicle minus a driving distance in a next driving period is less than a second set threshold. Similar to the first set threshold, the second set threshold may be manually set by the user of the electric vehicle, set by the server, or determined by other means, and the magnitude of the second set threshold does not limit the scope of protection of the invention. The server obtains the remaining range of the electric vehicle and determines whether the remaining range of the electric vehicle is less than the driving distance in the next driving period. If the remaining range is not enough to support the consumption by the driving distance of the electric vehicle in the next driving period, the method proceeds to step S360 to actively provide a valet power replenishment service for the electric vehicle. In this regard, it should be noted that the main purpose of providing the second set threshold is to provide a certain buffer for errors in range estimation, so as to avoid underestimating the driving distance in the next driving period, which will lead to a situation where power replenishment should have been but was not provided for the user, thus resulting in a lack of battery power and shutdown of the vehicle of the user during driving.

In step S350, it is determined whether a remaining range of the electric vehicle minus a driving distance in a future time period is less than a third set threshold. Similar to the first and second set thresholds, the third set threshold can be manually set by the user of the electric vehicle, set by the server, or determined by other means, and the magnitude of the third set threshold does not limit the scope of protection of the invention. Generally speaking, the third set threshold may be zero, that is, the server obtains the remaining range of the electric vehicle and determines whether the remaining range of the electric vehicle is less than the driving distance in a future time period. If the remaining range is not enough to support the consumption by the driving distance of the electric vehicle in the future time period, the method proceeds to step S360 to actively provide a valet power replenishment service for the electric vehicle. Similarly, the main purpose of providing the third set threshold is also to provide a certain buffer for errors in range estimation, so as to avoid underestimating the driving distance in a future time period, which will lead to a situation where power replenishment should have been but was not provided for the user, thus resulting in a lack of battery power and stranding the vehicle of the user during driving.

For example, a future time period is typically the next day, and the driving distance N of the next day can be calculated according to the following formula:

$$N = C_a \times W_1 + L_a \times W_2 + A_a \times W_3 + C_m \times W_4 + L_m \times W_5 + A_m \times W_6 \quad (1)$$

where Ca is the average daily range consumption in a current statistical cycle; $L_a$ is the average daily range consumption in the last statistical cycle; $A_a$ is an accumulative average daily range consumption; $C_m$ is the maximum daily range consumption in the current statistical cycle; $L_m$ is the maximum daily range consumption in the last statistical cycle; $A_m$ is the maximum daily range consumption in the an accumulative statistical cycle; and $W_1$, $W_2$, $W_3$, $W_4$, $W_5$ and $W_6$ are weighting factors. In the above formula (1), a default average driving distance will be used instead if there is no data of the average daily range consumption in the last statistical cycle, the accumulative average daily range consumption, the maximum daily range consumption in the last statistical cycle, and the maximum daily range consumption in the an accumulative statistical cycle. In addition, $W_1$, $W_2$, $W_3$, $W_4$, $W_5$ and $W_6$ are weighting factors of respective parts of data that are obtained based on a great lot of experiments.

As mentioned above, according to the invention, by determining whether a current state of the electric vehicle meets an idle-time condition, and after the idle-time condition is met, determining whether the current state of the electric vehicle meets a power replenishment condition, such as by determining whether the current state of charge of the electric vehicle is less than a first preset threshold, or determining whether the current remaining range of the electric vehicle can satisfy the need of range consumption in a next driving period, or determining whether the current remaining range of the electric vehicle can satisfy the need of range consumption in a future period of time, etc., or determining any two of the conditions mentioned above at the same time or determining all the three conditions mentioned above at the same time, that is to say, those skilled in the art can determine whether to provide a power replenishment service for the electric vehicle according to combination of different "determination criteria" according to actual application scenarios, the purpose of automatically and accurately providing a power replenishment service for electric vehicles is achieved without the need for users to send power replenishment service requests through an app by reservation, etc., so that the users do not need to worry about the state of charge of their electric vehicles any more, truly getting a worry-free user experience with their vehicles.

As mentioned above, the "idle-time condition" described above may be manually set by the user of the electric vehicle, or may be automatically identified by the server based on the historical data of the electric vehicle. As an example, the server collects the driving data of the user's electric vehicle, and then automatically identify idle time periods of the electric vehicle and storage places corresponding to the idle time periods, respectively, by means of statistics or machine learning. Specifically, the time period can be defined as: every two hours are taken as a time period, and a time period is recorded every half an hour. In this way, 48 time periods (0-2, 0.5-2.5, 1-3, 1.5-3.5, 2-4, ......, 23-1, and 23.5-1.5) will be recorded in one day (24 hours). Then, a statistical analysis is performed to determine whether the user's electric vehicle is idle during each of the time periods above: if a time period in which the electric vehicle is not in use covers a complete time period above entirely, this time period is regarded as an idle time period of the electric vehicle. For example, if the user's electric vehicle is idle during 0.20-2.20, it is considered that the electric vehicle is not idle during 0-2 and 0.5-2.5; and if the electric vehicle is idle during 0.2-2.8, the time period of 0.5-2.5 will be regarded as an idle time period of the electric vehicle. Moreover, when the electric vehicle is in an idle time period, current GPS information of the electric vehicle is calculated, and clustering is performed on the GPS position information, for example, locations within a 1-km radius around a central point are regarded as one and the same address. Then, the number of days of each of the time periods above being an idle time period in each power replenishment cycle of the electric vehicle are counted in a cumulative way on the basis of different idle addresses, that is, add 1 to the count each time the same address occurs in the same time period. According to the calculation of each statistical cycle, the following lists can be obtained: a list of idle time periods of the user's electric vehicle in a previous cycle (represented by L); a list of idle time periods of the user's electric vehicle in a current cycle (represented by C); a list of accumulated idle time periods of the user's electric vehicle (represented by A). Then, a weighted value ($P1*L+P2*C+P3*A$) of the cycles is calculated, where PI, P2 and P3 are the weighting factors obtained based on experimental data. The idle time periods and addresses with ($P1*L+P2*C+P3*A$) greater than or equal to a certain threshold value are taken as the automatically identified "idle-time condition" of the user's electric vehicle.

As a preferred embodiment, the power replenishment service provider should send a confirmation message to the user before initiating the valet power replenishment service, and provides the valet power replenishment service only after a confirmation is received from the user, so that the user can be aware of each power replenishment service provided for his/her electric vehicle in time, preventing interference with use of the vehicle by the user.

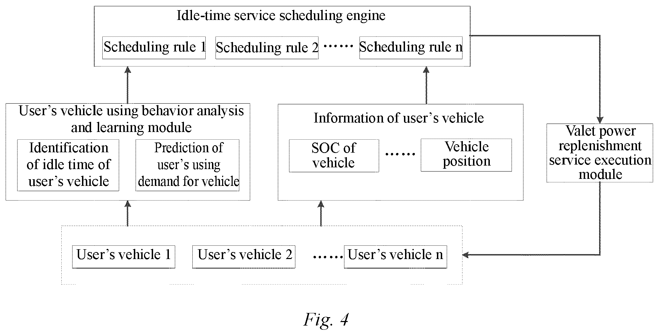

In order to understand the method of power replenishment of the invention more clearly, referring to Fig. 4, Fig. 4 is an overall framework diagram of the method of power replenishment of the invention applied to an electric vehicle. In this framework diagram, a user's vehicle using behavior analysis and learning module mainly provides idle time periods of the electric vehicle and the user's using demand for the vehicle (here, the user's using demand for the vehicle can be understood as: the range that the vehicle is expected to consume between two idle time periods, or the range that the vehicle is expected to consume in a future time period), etc. Information of the user's vehicle is used to collect the current information and related historical information of the user's electric vehicle, for example, the state of charge (SOC) of the vehicle, the current position of the vehicle, the last stop position of the vehicle, etc., as the data for analysis on the user's electric vehicle. An idle-time service scheduling engine is configured to: determine whether it is necessary to provide a power replenishment service for the electric vehicle based on the current information of the user's vehicle, the current and future idle-time information of the user's vehicle, the user's using demand for the vehicle for the next time and for a further future time, and in combination with scheduling rules (preset determination criteria); and if the electric vehicle needs a power replenishment service, further calculate specific contents of the power replenishment service, including a target value and completion time of power replenishment for the vehicle, and send a service execution instruction to a valet power replenishment service execution module to provide the power replenishment service for the user's electric vehicle. The valet power replenishment service execution module receives an instruction from the idle-time scheduling engine, allocates corresponding power replenishment resources according to contents of the instruction from the idle-time scheduling engine module, including a target value and completion time of power replenishment service for the electric vehicle, and executes the valet power replenishment service to provide the power replenishment service for the electric vehicle of the user.

The invention also provides a processing device, which is adapted to load and run a program so as to perform the above method of power replenishment for an electric apparatus in idle time.

The invention also provides a storage device in which a plurality of programs are stored, wherein the programs are adapted to be loaded by a processor to perform the above method of power replenishment for an electric apparatus in idle time.

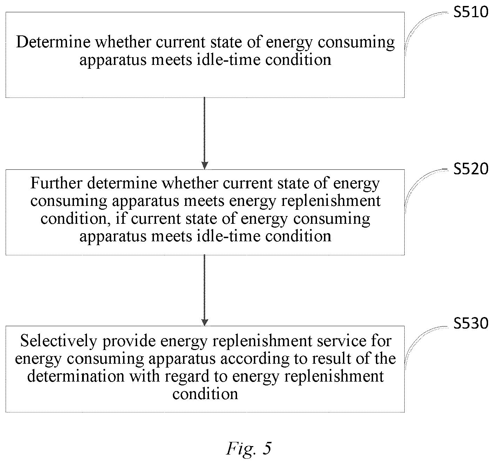

The method of power replenishment for an electric apparatus in idle time described above is mainly aimed at the power demand of electric apparatus. However, the method of the invention is not limited thereto and can be applied to any other apparatus requiring energy replenishment. Therefore, the invention also provides a method of energy replenishment for an energy-consuming apparatus in idle time. Referring specifically to Fig. 5, Fig. 5 is a flow chart of main steps of a method of energy replenishment for an energy-consuming apparatus in idle time of the invention. As shown in Fig. 5, the method of energy replenishment for an energy-consuming apparatus in idle time of the invention mainly comprises the steps of: S510, determining whether a current state of the energy-consuming apparatus meets an idle-time condition; S520, further determining whether the current state of the energy-consuming apparatus meets an energy replenishment condition, if the current state of the energy-consuming apparatus meets the idle-time condition; and S530, selectively providing an energy replenishment service for the energy-consuming apparatus according to a result of the determination with regard to the energy replenishment condition. The "idle-time condition" comprises an idle time period in which the energy-consuming apparatus is not in use and a storage place corresponding to the idle time period. With the method of energy replenishment according to the invention, a user no longer needs to call and reserve an energy replenishment service through an app, and instead, an energy replenishment service is automatically provided for the user's energy-consuming apparatus when the user's energy-consuming apparatus needs the energy replenishment service, so that the user does not need to worry about the remaining energy of the energy-consuming apparatus during use of the energy-consuming apparatus.

As an example, the energy-consuming apparatus in the method of energy replenishment can be a fuel vehicle, and the energy replenishment service can be a valet fueling service actively initiated by a fuel supplier. For a specific implementation of how to provide an energy replenishment service for a fuel vehicle, please refer to the above embodiment of the "method of power replenishment for an electric apparatus in idle time", which will not be described in detail here.

In addition, the invention also provides a processing device, which is adapted to load and run a program so as to perform the above method of energy replenishment for an energy-consuming apparatus in idle time.

The invention also provides a storage device in which a plurality of programs are stored, wherein the programs are adapted to be loaded by a processor to perform the above method of energy replenishment for an energy-consuming apparatus in idle time.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1.   A method of power replenishment for an electric apparatus in idle time, **characterized by** comprising the steps of:

   determining whether a current state of the electric apparatus meets an idle-time condition;
   further determining whether the current state of the electric apparatus meets a power replenishment condition, if the current state of the electric apparatus meets the idle-time condition; and
   selectively providing a power replenishment service for the electric apparatus according to a result of the determination with regard to the power replenishment condition,
   wherein the idle-time condition comprises an idle time period in which the electric apparatus is not in use.

2.   The method of power replenishment for an electric apparatus in idle time according to claim 1, **characterized in that** the idle-time condition is manually set by a user of the electric apparatus or automatically identified based on historical data of the electric apparatus.

3.   The method of power replenishment for an electric apparatus in idle time according to claim 1, **characterized in that** the current state of the electric apparatus comprises a use state, and
   the step of "further determining whether the current state of the electric apparatus meets a power replenishment condition, if the current state of the electric apparatus meets the idle-time condition" specifically comprises:
   further determining whether the current state of the electric apparatus meets a power replenishment condition, if a current time falls into the idle time period and the electric apparatus is not in use.

4.   The method of power replenishment for an electric apparatus in idle time according to claim 1, **characterized in that** the idle-time condition further comprises a storage place corresponding to the idle time period, and the current state of the electric apparatus further comprises a storage state.

5. The method of power replenishment for an electric apparatus in idle time according to claim 4, **characterized in that** the step of "further determining whether the current state of the electric apparatus meets a power replenishment condition, if the current state of the electric apparatus meets the idle-time condition" specifically comprises:
further determining whether the current state of the electric apparatus meets a power replenishment condition, if a current time falls into the idle time period and the electric apparatus is not in use and is stored in the storage place corresponding to the idle time period.

6. The method of power replenishment for an electric apparatus in idle time according to claim 1, **characterized in that** the step of "selectively providing a power replenishment service for the electric apparatus according to a result of the determination with regard to the power replenishment condition" specifically comprises:
providing a power replenishment service for the electric apparatus, if the current state of the electric apparatus meets the power replenishment condition.

7. The method of power replenishment for an electric apparatus in idle time according to claim 6, **characterized in that** the current state of the electric apparatus comprises a state of charge, and
the step of "providing a power replenishment service for the electric apparatus, if the current state of the electric apparatus meets the power replenishment condition" specifically comprises:
providing a power replenishment service for the electric apparatus, if the state of charge is less than a first set threshold.

8. The method of power replenishment for an electric apparatus in idle time according to claim 6, **characterized in that** the electric apparatus is an electric vehicle, and the current state of the electric apparatus comprises a remaining range of the electric vehicle.

9. The method of power replenishment for an electric apparatus in idle time according to claim 8, **characterized in that** the step of "providing a power replenishment service for the electric apparatus, if the current state of the electric apparatus meets the power replenishment condition" specifically comprises:
providing a power replenishment service for the electric vehicle, if the remaining range minus a driving distance in a next driving period of the electric vehicle is less than a second set threshold.

10. The method of power replenishment for an electric apparatus in idle time according to claim 8, **characterized in that** the step of "providing a power replenishment service for the electric apparatus, if the current state of the electric apparatus meets the power replenishment condition" specifically comprises:
providing a power replenishment service for the electric vehicle, if the remaining range minus a driving distance in a future time period of the electric vehicle is less than a third set threshold.

11. The method of power replenishment for an electric apparatus in idle time according to any one of claims 1 to 7, **characterized in that** the electric apparatus is an electric vehicle, and the power replenishment service is a valet power replenishment service actively initiated by a power replenishment service provider.

12. The method of power replenishment for an electric apparatus in idle time according to claim 11, **characterized in that** the power replenishment service provider sends a confirmation message to the user before initiating the valet power replenishment service, and provides the valet power replenishment service only after a confirmation is received from the user.

13. A processing device, **characterized in that** the processing device is adapted to load and run a program so as to perform the method of power replenishment for an electric apparatus in idle time of any one of claims 1 to 12.

14. A storage device in which a plurality of programs are stored, **characterized in that** the programs are adapted to be loaded by a processor to perform the method of power replenishment for an electric apparatus in idle time of any one of claims 1 to 12.

15. A method of energy replenishment for an energy-consuming apparatus in idle time, **characterized by** comprising the steps of:

determining whether a current state of the energy-consuming apparatus meets an idle-time condition;
further determining whether the current state of the energy-consuming apparatus meets an energy replenishment condition, if the current state of the energy-consuming apparatus meets the idle-time condition; and

selectively providing an energy replenishment service for the energy-consuming apparatus according to a result of the determination with regard to the energy replenishment condition,

wherein the idle-time condition comprises an idle time period in which the energy-consuming apparatus is not in use.

16. The method of energy replenishment for an energy-consuming apparatus in idle time according to claim 15, **characterized in that** the idle-time condition is manually set by a user of the energy-consuming apparatus or automatically identified based on historical data of the energy-consuming apparatus.

17. The method of energy replenishment for an energy-consuming apparatus in idle time according to claim 15, **characterized in that** the current state of the energy-consuming apparatus comprises a use state, and
the step of "further determining whether the current state of the energy-consuming apparatus meets an energy replenishment condition, if the current state of the energy-consuming apparatus meets the idle-time condition" specifically comprises:
further determining whether the current state of the energy-consuming apparatus meets an energy replenishment condition, if a current time falls into the idle time period and the energy-consuming apparatus is not in use.

18. The method of energy replenishment for an energy-consuming apparatus in idle time according to claim 15, **characterized in that** the idle-time condition further comprises a storage place corresponding to the idle time period, and the current state of the electric apparatus further comprises a storage state.

19. The method of power replenishment for an electric apparatus in idle time according to claim 18, **characterized in that** the step of "further determining whether the current state of the energy-consuming apparatus meets an energy replenishment condition, if the current state of the energy-consuming apparatus meets the idle-time condition" specifically comprises:
further determining whether the current state of the energy-consuming apparatus meets an energy replenishment condition, if a current time falls into the idle time period and the energy-consuming apparatus is not in use and is stored in the storage place corresponding to the idle time period.

20. The method of energy replenishment for an energy-consuming apparatus in idle time according to claim 15, **characterized in that** the step of "selectively providing an energy replenishment service for the energy-consuming apparatus according to a result of the determination with regard to the energy replenishment condition" specifically comprises:
providing an energy replenishment service for the energy-consuming apparatus, if the current state of the energy-consuming apparatus meets the energy replenishment condition.

21. The method of energy replenishment for an energy-consuming apparatus in idle time according to claim 20, **characterized in that** the current state of the energy-consuming apparatus comprises a remaining amount of energy, and the step of "providing an energy replenishment service for the energy-consuming apparatus, if the current state of the energy-consuming apparatus meets the energy replenishment condition" specifically comprises:
providing an energy replenishment service for the energy-consuming apparatus, if the remaining amount of energy is less than a first set threshold.

22. The method of energy replenishment for an energy-consuming apparatus in idle time according to claim 20, **characterized in that** the energy-consuming apparatus is a fuel vehicle, and the current state of the energy-consuming apparatus comprises a remaining range of the fuel vehicle.

23. The method of energy replenishment for an energy-consuming apparatus in idle time according to claim 22, **characterized in that** the step of "providing an energy replenishment service for the energy-consuming apparatus, if the current state of the energy-consuming apparatus meets the energy replenishment condition" specifically comprises:
providing an energy replenishment service for the fuel vehicle, if the remaining range minus a driving distance in a next driving period of the fuel vehicle is less than a second set threshold.

24. The method of energy replenishment for an energy-consuming apparatus in idle time according to claim 22, **characterized in that** the step of "providing an energy replenishment service for the energy-consuming apparatus, if the current state of the energy-consuming apparatus meets the energy replenishment condition" specifically comprises:

providing an energy replenishment service for the fuel vehicle, if the remaining range minus a driving distance in a future time period of the fuel vehicle is less than a third set threshold.

25. The method of energy replenishment for an energy-consuming apparatus in idle time according to any one of claims 15 to 21, **characterized in that** the energy-consuming apparatus is a fuel vehicle, and the energy replenishment service is a valet energy replenishment service actively initiated by a fuel supplier.

26. The method of energy replenishment for an energy-consuming apparatus in idle time according to claim 25, **characterized in that** the fuel supplier sends a confirmation message to the user before initiating the valet energy replenishment service, and provides the valet energy replenishment service only after a confirmation is received from the user.

27. A processing device, **characterized in that** the processing device is adapted to load and run a program so as to perform the method of energy replenishment for an energy-consuming apparatus in idle time of any one of claims 15 to 26.

28. A storage device in which a plurality of programs are stored, **characterized in that** the programs are adapted to be loaded by a processor to perform the method of energy replenishment for an energy-consuming apparatus in idle time of any one of claims 15 to 26.

Determine whether current state of electric apparatus meets idle-time condition — S110

Further determine whether current state of electric apparatus meets power replenishment condition, if current state of electric apparatus meets idle-time condition — S120

Selectively provide power replenishment service for electric apparatus according to result of the determination with regard to power replenishment condition — S130

*Fig. 1*

*Fig. 2*

Obtain current state of the electric vehicle — S310

Does current state of electric vehicle meet idle-time condition? — S320

—Yes—

—Yes—

Yes

State of charge < First set threshold? — S330

Remaining range minus driving distance in next driving period < Second set threshold? — S340

Remaining range minus driving distance in future time period < Third set threshold? — S350

Yes

Yes

Yes

Actively provide valet power replenishment service for electric vehicle — S360

*Fig. 3*

Idle-time service scheduling engine

| Scheduling rule 1 | Scheduling rule 2 | ⋯⋯ | Scheduling rule n |

User's vehicle using behavior analysis and learning module

| Identification of idle time of user's vehicle | Prediction of user's using demand for vehicle |

Information of user's vehicle

| SOC of vehicle | ⋯⋯ | Vehicle position |

Valet power replenishment service execution module

| User's vehicle 1 | User's vehicle 2 | ⋯⋯ | User's vehicle n |

*Fig. 4*

Determine whether current state of energy consuming apparatus meets idle-time condition — S510

Further determine whether current state of energy consuming apparatus meets energy replenishment condition, if current state of energy consuming apparatus meets idle-time condition — S520

Selectively provide energy replenishment service for energy consuming apparatus according to result of the determination with regard to energy replenishment condition — S530

*Fig. 5*

## INTERNATIONAL SEARCH REPORT

| International application No. |
|---|
| **PCT/CN2018/102351** |

**A.    CLASSIFICATION OF SUBJECT MATTER**

H02J 3/32(2006.01)i

According to International Patent Classification (IPC) or to both national classification and IPC

**B.    FIELDS SEARCHED**

Minimum documentation searched (classification system followed by classification symbols)

H02J 3; B60L 11

Documentation searched other than minimum documentation to the extent that such documents are included in the fields searched

Electronic data base consulted during the international search (name of data base and, where practicable, search terms used)

SIPOABS, CNKI, CNABS, DWPI: 电动车, 电动汽车, 车, 加电, 充电, 历史, 习惯, 用户, vehicle, car, driver, user, charge, power, habit, behavior

**C.    DOCUMENTS CONSIDERED TO BE RELEVANT**

| Category* | Citation of document, with indication, where appropriate, of the relevant passages | Relevant to claim No. |
|---|---|---|
| X | CN 107042768 A (NIO NEXTEV LIMITED) 15 August 2017 (2017-08-15) description, paragraphs [0033]-[0098], and figures 1-3 | 1-28 |
| PX | CN 108336749 A (NIO NEXTEV LIMITED) 27 July 2018 (2018-07-27) description, paragraphs [0032]-[0046], and figures 1-5 | 1-28 |
| A | CN 107054111 A (NIO NEXTEV LIMITED) 18 August 2017 (2017-08-18) entire document | 1-28 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2018** | **05 December 2018** |

| Name and mailing address of the ISA/CN | Authorized officer |
|---|---|
| **State Intellectual Property Office of the P. R. China (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/102351**

| Patent document cited in search report | | | Publication date (day/month/year) | Patent family member(s) | | | Publication date (day/month/year) |
|---|---|---|---|---|---|---|---|
| CN | 107042768 | A | 15 August 2017 | WO | 2018107764 | A1 | 21 June 2018 |
| CN | 108336749 | A | 27 July 2018 | | None | | |
| CN | 107054111 | A | 18 August 2017 | | None | | |

Form PCT/ISA/210 (patent family annex) (January 2015)